# EUROPEAN PATENT SPECIFICATION

(11) **EP 1 543 998 B1**
(45) Date of publication and mention of the grant of the patent: **21.03.2007**
(21) Application number: 04106468.4
(22) Date of filing: 10.12.2004
(51) Int. Cl.: B60C 1/00, C08L 23/22, C08L 23/28, C08L 25/16

(54) **Tire with innerliner for prevention of vapor permeation**
Reifen mit Innenbeschichtung zur Verhinderung von Dampfdurchlässigkeit
Bandage pneumatique ayant un revêtement interne imperméable à la vapeur

(30) Priority: 17.12.2003 US 738580
(43) Date of publication of application: 22.06.2005
(73) Proprietor: THE GOODYEAR TIRE & RUBBER COMPANY, Akron, Ohio 44316-0001 (US)
(72) Inventor: SPADONE, Leighton Randolph, beachwood, OH Ohio 44122 (US)
(74) Representative: Kutsch, Bernd

(56) References cited:
- EP-A- 0 889 083
- EP-A- 0 941 872
- EP-A- 1 074 582
- EP-A- 1 086 830
- EP-A- 1 213 323
- EP-A- 1 228 900
- US-A- 4 725 649
- US-A- 5 386 864

## Description

### Field of the Invention

The present invention relates to a pneumatic tire having a layer, preferably an innerliner, for prevention, or retardation, of air/moisture vapor permeation from its inner chamber into the remainder of the tire.

### Background of the Invention

A pneumatic rubber tire is conventionally of a toroidal shape and comprised of a carcass with a cavity in which its closure is typically completed with a rigid rim onto which the tire is to be mounted.

The inner surface of a pneumatic tire, namely a surface of said cavity which is sometimes referred to as an "innerliner" is typically a rubber layer composed of an elastomeric composition designed to prevent, or retard, the permeation of air and moisture into the tire carcass from the aforesaid cavity which becomes the tire's inner air chamber.

Butyl rubber is typically relatively impermeable to air and moisture and is often used as a major portion of the tire innerliner composition and can be in a form of butyl rubber or halobutyl rubber such as, for example, bromobutyl rubber. For example, see US-A- 3,808,177. Butyl rubber is an isobutylene copolymer with a small amount of isoprene which typically contains only from 0.5 to 5 weight percent units derived from isoprene. Butyl rubber, while containing a minor amount of units derived from a diene such as, for example isoprene, is not considered herein as being a diene-based rubber since it contains less than 10 percent of its content derived form a diene monomer and, therefore, sulfur vulcanizes at a much slower rate than diene-based elastomers which contain at least, for example, 30 percent of their elastomer content derived from diene monomers.

For this invention, it is desired to provide a butyl, or halobutyl, based rubber composition which has good handling, or processing, characteristics in its uncured condition to aid in its preparation in a form of a sheet, or strip, and the handling of the strip in the preparation of a tire assembly with the sheet as an innerliner, followed by enhanced green strength and flow of the rubber composition itself for better processing and aged flex performance and aged adhesion properties for the cured innerliner composition for improved innerliner physical performance.

In the description of this invention, the term "phr" where used herein, and according to conventional practice, refers to "parts of a respective material per 100 parts by weight of rubber, or elastomer".

In the description of this invention, the terms "rubber" and "elastomer" may be used interchangeably, unless otherwise prescribed. The terms "rubber composition", "compounded rubber" and "rubber compound" are used interchangeably to refer to "rubber which has been blended or mixed with various ingredients and materials".

The term "carbon black" as used herein means "carbon blacks having properties typically used in the reinforcement of elastomers, particularly sulfur-curable elastomers".

A reference to an elastomer's Tg refers to its glass transition temperature which can conveniently be determined by a differential scanning calorimeter at a heating rate of 10°C per minute.

EP-A- 1228900 discloses a tire according to the preamble of claim 1.

Innerliner compositions for tires comprising rubbers selected from brominated isobutylene-paramethylstyrene copolymers or brominated butyl rubbers and carbon black as reinforcing fillers are known from US-A-5,386,864, EP-A- 1086830, EP-A- 0889083 and US-A- 4,725,649.

The use of reinforcing fillers comprising carbon black, silica and a silica coupling agent for the preparation of innerliners is known from EP-A- 1074582 and EP-A- 0941872.

An innerliner compositions for a tire comprising a brominated butyl rubber, a reinforcing filler of carbon black and silica, and a silane coupling agent is known from EP-A- 1213323.

### Summary and Practice of the Invention

In accordance with this invention, a pneumatic tire is provided which contains an air/moisture vapor permeation prevention or retardation layer like an innerline layer, on its inner surface according to claim 1.

The copolymer comprised of isobutylene and isoprene is referred to herein as butyl rubber.

The copolymer halogenated with chlorine or bromine is referred to herein as chlorobutyl and bromobutyl rubber, respectively.

Particulate synthetic amorphous precipitated silica preferably is precipitated aggregates of primary silica particles.

Preferably, said prevention or retardation layer has a thickness in a range of 2.5 to 6 mm.

A significant aspect of the invention is the use of a particulate precipitated silica as the major reinforcing agent in an isobutylene based copolymer rubber, together with a coupling agent and together with a minor amount of reinforcing carbon black.

It is considered herein that the addition of the dispersion of the precipitated silica can act to increase green strength for better processing of the uncured rubber composition and increase aged flex performance of the cured rubber composition. Additionally, the type of silica coupler incorporated in the formulation is considered herein to be a significant aspect, as sell as its method of incorporation (e.g. mixing) into the rubber composition. The resulting innerliner is an isobutylene copolymer elastomer-based composition which contains a dispersion of carbon black and precipitated silica reinforcement together with a coupling agent. In one aspect, the coupling agent is a bis(3-triethoxysilylpropyl) polysulfide which contains an average of from 2 to 4, preferably from 2 to 2.6, connecting sulfur atoms in its polysulfidic bridge. In another aspect, the coupling agent is blended with the composition in a productive mixing stage.

Additionally, a process of preparing a pneumatic tire comprising an innerliner, to the preparation of the innerliner strip, its incorporation into the tire assembly, and the curing of the tire assembly is disclosed.

Preferably, the thermomechanically mixing in at least one preparatory (non-productive) mixing step in an internal rubber mixer is done in the absence of sulfur and peroxide curatives and in the absence of silica coupling agent. The zinc oxide curative can be a crosslinking agent.

Therefore, it is considered herein that an additional significant aspect of this invention is the preparation of the pneumatic tire with an innerliner layer, or strip, composition itself prepared by use of a combination of the isobutylene copolymer, with its minimal diene derived content, with a precipitated silica reinforcement combined with use of silica coupling agent as a bis(3-triethoxysilylpropyl) polysulfide which is limited to having an average of from 2 to 4, alternately only in a range of from 2 to 2.6, connecting sulfur atoms in its polysulfidic bridge. Where the bis(3-triethoxysilylpropyl) polysulfide having an average of from only 2 to 2.6 connecting sulfur atoms in its polysulfide bridge is used, it is preferably used to the exclusion of (or in the absence of) bis(3-trialkylsilylalkyl) polysulfides, including bis(3-triethoxysilylpropyl) polysulfide, having an average of at 3.4 or more, and preferably an average of 3 or more, connecting sulfur atoms in its polysulfidic bridge.

It is further considered herein that a significant aspect of this invention is the preparation of the pneumatic tire with an innerliner layer, or strip, composition itself prepared by use of a combination of the isobutylene copolymer, with its minimal diene derived content, with a precipitated silica reinforcement combined with use of silica coupling agent as a bis(triethoxysilylpropyl) polysulfide which is limited to having an average of only from 2 to 2.6 connecting sulfur atoms in its polysulfidic bridge, wherein the silica coupling agent is required to be added in the productive mixing step to the exclusion of its addition in a preparatory, non-productive mixing step.

Accordingly, it is considered herein that a new, novel, silica reinforced integral tire innerliner is provided, with the associated pneumatic tire, with improved processing and tire performance properties as compared to simply providing a carbon black reinforced butyl, or halobutyl, rubber-based innerliner.

The building of the pneumatic tire with the innerliner, where the tire would normally include a circumferential tread, two spaced apart beads, an underlying carcass with cord reinforced rubber plies and sidewalls connecting said beads would build as an assembly of the various components and placed in a suitable mold for finally shaping and curing the tire, would be readily understood by one having skill in the pertinent art.

The shaping by extrusion and/or calendaring of the innerliner composition into a strip for application as an innerliner layer of a pneumatic tire assembly would also be readily understood by one having skill in such art.

The preparation of the innerliner composition itself, particularly, by the aforesaid sequential mixing in one or more internal mixers would further be well understood by one having skill in such art. The use of preparatory, or non-productive, mixing steps, or stages, without curatives, or a cure package, followed by a productive mixing step in which curative, or cure package is added is also well understood by one having skill in such art.

An addition of a silica coupling agent in a productive mixing stage has been suggested in various U.S. patents such as, for example, US-A- 5,534,574 and 5,674,932.

In particular, the philosophy of the mixing process is to de-couple the reaction of the siloxy groups of the coupling agent with hydroxyl groups contained on the precipitated silica from the action of the sulfur atoms of the coupling agent.

The reaction of the siloxy groups of the coupling agent with the hydroxyl groups (e.g. silanol groups) on the precipitated silica is normally considered be a relatively fast reaction which can be caused to occur in a non-productive or subsequent productive mixing stage, depending on whether the coupling agent is added and mixed with the precipitated silica in a non-productive mixing stage or in a subsequent productive mixing stage.

However, the interaction of the sulfur atom(s) of the coupling agent with the elastomer itself is considered herein to be another matter. While the interaction is normally considered to be much slower than the aforesaid reaction of the alkoxy groups of the coupling agent with the hydroxyl groups of the precipitated silica, nevertheless it is desired herein to minimalism such interaction in the preliminary, non-productive, mixing stages in order to not promote an associated increase in rubber viscosity and resultant increase in difficulty in processing of the innerliner rubber composition.

According, for the purposes of this invention, when the bis(3-triethoxysilylpropyl) polysulfide coupling agent is limited to an addition in the productive mixing stage and further limited to having an average of only from about 2 to about 2.6 connecting sulfur atoms in its polysulfidic bridge in which such sulfur atoms are more tightly held by the silica coupling agent as compared to a bis(3-triethoxysilylpropyl) polysulfide which contains an average of 3 or more connecting sulfur atoms in its polysulfidic bridge.

The following example is provided for a further understanding of the invention. The parts and percentages are by weight unless otherwise specified.

### EXAMPLE I

Samples of bromobutyl rubber-based compositions are prepared for tire innerliner evaluation.

Control Sample A contains only carbon black reinforcement. Sample B contains both carbon black reinforcement and synthetic, amorphous, precipitated silica and a silica coupling agent, wherein the precipitated silica is in the majority insofar as the rubber reinforcing carbon black and precipitated silica are concerned.

The silica coupling agent is a bis(3-triethoxysilylpropyl) polysulfide which contains an average in a range of from 2 to 2.6 connecting sulfur atoms in its polysulfidic bridge.

The innerliner rubber composition is prepared by blending the precipitated silica and elastomer in a preparatory (non-productive) mixing stage in an internal rubber mixer followed by mixing the curative and silica coupling agent in a subsequent (productive) mixing stage in an internal rubber mixer.

In particular, the rubber compositions are prepared by mixing the respective ingredients in an internal rubber mixer under high shear mixing conditions in at least one preparatory (non-productive) mixing stage(s) without free sulfur and accelerator curatives for 4 minutes to a temperature of 170°C. The rubber composition is removed from the internal rubber mixer, open roll milled, sheeted out and allowed to cool below 40°C before the next mixing step, or stage.

In a subsequent mixing stage, in an internal rubber mixer, (productive mixing stage), sulfur and accelerator curatives, as well as the silica coupling agent, are mixed with the rubber composition for 1 minute to a temperature of 120°C. The rubber composition was then removed from the internal rubber mixer, open roll milled, sheeted out and allowed to cool below 40°C.

The method of preparing rubber compositions via a sequential series of one or more non-productive mixing stages followed by a productive mixing stage is well known to those skilled in such art.

Formulations for Control Sample A and Sample B are shown in the following Table 1.

**Table 1**

| Ingredient | Control Sample A | Sample B |
|---|---|---|
| Non-Productive Mixing Step | | |
| Bromobutyl rubber¹ | 100 | 100 |
| Carbon black² | 50 | 15 |
| Zinc oxide | 0.75 | 0.5 |
| Fatty acid³ | 1 | 0.5 |
| Precipitated silica⁴ | 0 | 45 |
| ackifying resin and oils | 14 | 13 |

| Productive Mixing Step | | |
|---|---|---|
| Sulfur | 0.5 | 0 |
| Coupling agent⁶ | 0 | 1 |
| Cure retarder/accelerator(s)⁷ | 1.3 | 1.2 |
| Zinc oxide curative for the bromobutyl rubber | 0.75 | 0.75 |

| | | |
|---|---|---|
| ¹A brominated butyl rubber as Bromobutyl 2255^{™} from the ExxonMobil Company ²N330, an HAF (high abrasion furnace black) rubber reinforcing carbon black, an ASTM designation ³Primarily, stearic acid ⁴Precipitated silica as Zeopol 877 from the Huber Company ⁵Silica coupler as X266S^{™} from the Degussa AG as a composite of bis(3-triethoxysilylpropyl) polysulfide having an average in a range of from about 2.2 to about 2.4 connecting sulfur atoms in its polysulfidic bridge and carbon black in about a 50/50 weight ratio and reported in the Table as the composite which is considered herein to be 50 percent active. ⁶Cure retarder/accelerator combination for the bromobutyl rubber as benzothiazole disulfide and tetramethylthiuramdisulfide | | |

Various uncured (green) and cured properties of the Samples are shown in the following Table 2.

For the cured properties, the respective samples were cured at a temperature of 150°C for 125 minutes. The lengthy cure time was used to simulate the cure experience of very large off-the-road earth mover tires.

For the aged properties, the respective cured samples were aged for 20 days in a hot air oven at 100°C before testing. The aging of the cured samples was used to simulate severe service conditions which may be experienced by very large off-the-road earth mover tires.

**Table 2**

| Test/Property | Control Sample A | Sample B | Percent of Sample B |
|---|---|---|---|
| Spider compound flow (grams)¹ | 13.3 | 4.9 | 37 |

| Green Strength (tensile strengths and elongation of uncured sample) | | | |
|---|---|---|---|
| 40 percent elongation (MPa) | 0.445 | 0.542 | 122 |
| 80 percent elongation (MPa) | 0.493 | 0.616 | 125 |
| 120 percent elongation (MPa) | 0.507 | 0.695 | 127 |
| 240 percent elongation (MPa) | 0.503 | 0.810 | 137 |
| 480 percent elongation (MPa) | 0.427 | 0.687 | 161 |
| Ultimate green (uncured) tensile strength (MPa) | 0.453 | 1.164 | 257 |
| Ultimate green (uncured) elongation (percent) | 4,587 | 2,890 | 63 |

| Aged ring modulus at 26°C (MPa) | | | |
|---|---|---|---|
| 150 percent elongation | 2.5 | 2.52 | 101 |
| 200 percent elongation | 3.73 | 3.6 | 97 |
| 300 percent elongation | 6.46 | 6.2 | 96 |
| Ultimate aged tensile strength (MPa) | 9.65 | 8.0 | 83 |
| Ultimate aged elongation (percent) | 477 | 401 | 84 |
| Aged energy under modulus vs. elongation curve (Joules)² | 80.74 | 53.3 | 66 |

| Aged Hardness (Shore A) | | | |
|---|---|---|---|
| At 23°C | 65.4 | 68.7 | 105 |
| At 100°C | 52.5 | 56.7 | 108 |

| Aged Rebound | | | |
|---|---|---|---|
| At 23°C | 12.8 | 12.5 | 98 |
| At 100°C | 42.9 | 39.9 | 93 |
| Aged cut growth at 100°C (mm/min)² | 0.074 | 0.04 | 55 |
| Aged vapor diffusion, or permeation, (gm/day)³ | 0.02 | 0.022 | 111 |

| | | | |
|---|---|---|---|
| ¹Reduced spider flow is a desirable property where increased viscosity of the rubber composition is desired. A spider flow test is used by rubber product manufacturers to evaluate potential flowability of rubber compositions during the shaping and curing of a green tire assembly in a suitable mold. Test parameters used for such test to generate the spider flow numbers (grams) are a 40 minute time period in a mold pre-heated to 135°C using a 1/8 inch (3.2 mm) diameter orifice and hydraulic pressure of 20,000 pounds (9,080 kg). The mold used was equivalent to a mold manufactured by Brocton Machine, Inc. in Brocton, Massachusetts, U.S.A. per DuPont drawing No. EL-1156. The resultant flow of the rubber sample is measured in grams per extruded test sample. It is believed that such method of determining a spider flow property rubber sample is well known to those having skill in such art. ²The cut growth test is measure of crack growth during dynamic continuous flexing without relaxation of the sample. The test is sometimes referred to as a DeMattia (Pierced Groove Flex Test). The crack growth of the sample is measured in inches per minute and converted to millimeters (mm) per minute for this Example. The test is conducted with a DeMattia Flexing Machine^{™} at 100°C. The test samples, cured in a DeMattia mold, are of a width of 1.0 inches (2.54 cm) of a size 0.25 x1.0 x 6.0 inches (0.635 cm x 2.54 cm x 15.24 cm) with a 0.1875 inch (0.4763 cm) diameter half-cylinder groove molded in the center of the sample. The sample is punctured in the center of the groove with an ASTM piercing tool. The sample is flexed at a constant rate of about 300 +/- cycles per minute. The sample is subjected to a flexing action at the groove from a straight to doubled position. The flexing action induces a tear starting at the puncture and traveling laterally across the groove. Once cracking is detected, the time and crack length are recorded. For example, reference may be made to ASTM D813. ³For the vapor diffusion test, reference is made to ASTM 814. In particular, a thin sheet of the sample having a thickness of 1.016 mm is fitted over a 500 ml diameter open metal container which contains 200 ml of distilled water in which the thus covered container is placed in a hot air oven for 4 days at 180°C. The weight loss of the air/water vapor from the container is measured and reported in units of grams of weight loss each 24 hour period, or grams/day (g/d), as a measure of the vapor permeability of the sample. | | | |

For the uncured Sample B, as compared to uncured Control Sample A, it can be seen from Table 2 that processability of uncured Sample B is greatly improved as evidenced by a significantly reduced uncured spider flow which is a desirable property for improving handling or uncured sheets, particularly large sheets as would be used for large off-the-road earth mover tire innerliners, during the tire building process, to promote less potential distortion and tearing of the sheet.

Also, for the uncured Sample B, as compared to uncured Control Sample A, it can be seen from Table 2 that uncured Sample B has a significantly increased tensile strength for the same elongation as it is being stretched and, further, has a significantly greater ultimate tensile strength at break. These are desirable properties for improving handling or uncured sheets, particularly large sheets as would be used for large off-the-road earth mover tire innerliners, during the tire building process, to promote less potential distortion and tearing of the sheet.

For the cured Sample B, as compared for the cured Sample A, it can be seen from Table 2 that the aged flex life is improved without a significant effect on aged vapor diffusion, or permeation. This is considered herein to be significant because improved innerliner flex life is envisioned herein to promote increased tire longevity in service.

## Claims

1. A pneumatic tire which contains an air/moisture vapor permeation prevention or retardation layer on its inner surface, wherein said layer is a rubber composition comprising, based upon 100 parts by weight of rubber (phr),
(A) 100 parts by weight of at least one isobutylene based copolymer selected from:
(1) copolymer comprising isobutylene and isoprene which contains from 0.5 to 5 weight percent units derived from isoprene,
(2) halogenated copolymer comprising isobutylene and isoprene which contains from 0.5 to 5 weight percent units derived from isoprene wherein said copolymer is halogenated with chlorine or bromine; and
(3) brominated copolymer of isobutylene and paramethyl styrene;
(B) from 30 to 70 phr of reinforcing filler consisting of:
(1) from 10 to 30 phr of rubber reinforcing carbon black, and
(2) from 30 to 60 phr of a particulate synthetic amorphous precipitated silica, whereas, insofar as said rubber reinforcing carbon black and said precipitated silica is concerned, said precipitated silica is in the majority;
**characterized in that** said rubber composition contains a coupling agent consisting of a bis (3-triethoxysilylpropyl) polysulfide having an average of from 2 to 4 connecting sulfur atoms in its polysulfidic bridge.

2. The tire of claim 1 wherein said prevention or retardation layer has a thickness in a range of from 2.5 to 6 mm.

3. The tire of claim 1 or 2, wherein said isobutylene based copolymer is said copolymer comprising isobutylene and isoprene which contains from 0.5 to 5 weight percent units derived from isoprene.

4. The tire of claim 1 or 3, wherein said copolymer comprising isobutylene and isoprene is halogenated with chlorine or bromine.

5. The tire of claim 1 or 2, wherein said isobutylene copolymer is said brominated copolymer of isobutylene and paramethyl styrene.

## Patentansprüche

1. Luftreifen, der eine Luft-/Wasserdampfpermeations-Verhinderungs- oder -Verzögerungsschicht an seiner Innenfläche enthält, wobei besagte Schicht eine Kautschukzusammensetzung ist, umfassend, basiert auf 100 Gewichtsteilen Kautschuk (ThK),
(A) 100 Gewichtsteile wenigstens eines Copolymers auf Basis von Isobutylen, ausgewählt aus :
(1) Isobutylen und Isopren umfassendes Copolymer, das 0,5 bis 5 Gewichtsprozent von Isopren stammender Einheiten enthält ;
(2) Isobutylen und Isopren umfassendes halogeniertes Copolymer, das 0,5 bis 5 Gewichtsprozent von Isopren stammender Einheiten enthält, wobei besagtes Copolymer mit Chlor oder Brom halogeniert ist ; und
(3) bromiertes Copolymer von Isobutylen und Paramethylstyrol ;
(B) 30 bis 70 ThK Verstärkungsfüllstoff, bestehend aus
(1) 10 bis 30 ThK Kautschukverstärkungs-Carbon Black, und
(2) 30 bis 60 ThK eines partikelförmigen synthetischen amorphen ausgefällten Silikas, wobei, soweit besagtes Kautschukverstärkungs-Carbon Black und besagtes ausgefälltes Silika betroffen ist, besagtes ausgefälltes Silika in der Mehrheit ist ;
**dadurch gekennzeichnet, dass** besagte Kautschukzusammensetzung ein Kopplungsmittel enthält, bestehend aus einem Bis(3-triethoxysilylpropyl)polysulfid mit einem Durchschnitt von 2 bis 4 verbindenden Schwefelatomen in seiner Polysulfidbrücke.

2. Reifen von Anspruch 1, wobei besagte Verhinderungs- oder Verzögerungsschicht eine Dicke in einem Bereich von 2,5 bis 6 mm hat.

3. Reifen von Anspruch 1 oder 2, wobei besagtes Copolymer auf Basis von Isobutylen besagtes, Isobutylen und Isopren umfassendes Copolymer ist, das 0,5 bis 5 Gewichtsprozent von Isopren stammender Einheiten enthält.

4. Reifen von Anspruch 1 oder 3, wobei besagtes, Isobutylen und Isopren umfassendes Copolymer mit Chlor oder Brom halogeniert ist.

5. Reifen von Anspruch 1 oder 2, wobei besagtes Isobutylencopolymer besagtes bromiertes Copolymer von Isobutylen und Paramethylstyrol ist.

## Revendications

1. Bandage pneumatique qui contient une couche de prévention ou de retardement de perméation à l'air/à la vapeur d'humidité sur sa surface interne, dans lequel ladite couche est une composition du caoutchouc comprenant, en se basant sur 100 parties en poids de caoutchouc (phr),
(A) à concurrence de 100 parties en poids, au moins un copolymère à base d'isobutylène, choisi parmi le groupe comprenant :
(1) un copolymère comprenant de l'isobutylène et de l'isoprène, qui contient des unités qui dérivent de l'isoprène, à concurrence de 0,5 à 5 % en poids ;
(2) un copolymère halogéné comprenant de l'isobutylène et de l'isoprène qui contient des unités qui dérivent de l'isoprène, à concurrence de 0,5 à 5 % en poids, ledit copolymère étant soumis à une halogénation avec du chlore ou avec du brome; et
(3) un copolymère bromé d'isobutylène et de paraméthylstyrène ;
(B) à concurrence de 30 à 70 phr, une matière de renforcement constituée par:
(1) à concurrence de 10 à 30 phr, du noir de carbone pour le renforcement du caoutchouc ; et
(2) à concurrence de 30 à 60 phr, de la silice précipitée amorphe synthétique particulaire, avec cette précision que, en ce qui concerne ledit noir de carbone de renforcement du caoutchouc et ladite silice précipitée, ladite silice précipitée est majoritaire ;
**caractérisé en ce que** ladite composition de caoutchouc contient un agent de couplage constitué d'un bis(3-triéthoxysilylpropyl) polysulfure possédant en moyenne de 2 à 4 atomes de soufre de liaison dans son pont polysulfure.

2. Bandage pneumatique selon la revendication 1, dans lequel ladite couche de prévention ou de retardement possède une épaisseur dans la plage de 2,5 à 6 mm.

3. Bandage pneumatique selon la revendication 1 ou 2, dans lequel ledit copolymère à base d'isobutylène représente ledit copolymère comprenant de l'isobutylène et l'isoprène qui contient des unités qui dérivent de l'isoprène à concurrence de 0,5 à 5 % en poids.

4. Bandage pneumatique selon la revendication 1 ou 3, dans lequel ledit copolymère comprenant de l'isobutylène et de l'isoprène est soumis à une halogénation avec du chlore ou du brome.

5. Bandage pneumatique selon la revendication 1 ou 2, dans lequel ledit copolymère d'isobutylène représente ledit copolymère bromé d'isobutylène et de paraméthylstyrène.
